# EUROPÄISCHE PATENTSCHRIFT

(11) **EP 3 401 504 B1**
(45) Veröffentlichungstag und Bekanntmachung des Hinweises auf die Patenterteilung: **03.07.2024**
(21) Anmeldenummer: 17170495.0
(22) Anmeldetag: 10.05.2017
(51) Int. Cl.: F01D 5/14, F01D 9/04

(54) **SCHAUFELGITTER**
BLADE GRID
GRILLE D'AUBE

(43) Veröffentlichungstag der Anmeldung: 14.11.2018
(73) Patentinhaber: MTU Aero Engines AG, 80995 München (DE)
(72) Erfinder: Maatouk, Fadi, 80807 München (DE); Brettschneider, Markus, 85757 Karlsfeld (DE); Mahle, Inga, 77880 Sasbach (DE)

(56) Entgegenhaltungen:
- EP-A1- 2 631 429
- EP-A1- 2 746 533
- EP-A1- 2 806 103
- US-B2- 8 511 978

## Beschreibung

Die vorliegende Erfindung betrifft ein Schaufelgittersegment, ein Schaufelgitter und einen Schaufelkanal einer Strömungsmaschine sowie eine Strömungsmaschine und ein Flugzeugtriebwerk.

Strömungsmaschinen (wie Gas- und Dampfturbinen) weisen regelmäßig einen Strömungskanal zur Durchführung eines Fluids auf. Der Strömungskanal, der auch als "Ringraum" bezeichnet wird, ist nach radial innen durch die Welle eines Rotors begrenzt und nach radial außen durch ein Gehäuse; die Bezeichnungen "radial" ebenso wie "axial" und "Umfangsrichtung" sowie davon abgeleitete Begriffe sind in dieser Schrift - sofern nichts anderes angegeben ist - in Bezug auf eine Rotationsachse des Rotors zu verstehen.

Im Ringraum einer Strömungsmaschine sind Schaufelgitter angeordnet (für die auch die Bezeichnung "Schaufelkranz" üblich ist). Sie umfassen jeweils Leit- oder Laufschaufeln, die in Umfangsrichtung in im Wesentlichen regelmäßigen Abständen hintereinanderliegen, sowie zugehörige Plattformen, die auch als "Deckplatten" bezeichnet werden und die in der Regel jeweils eine anströmseitige und eine abströmseitige Plattformkante aufweisen. Diese Plattformkanten begrenzen die Plattformoberfläche in axialer Richtung; als "Plattformoberfläche" wird dabei in dieser Schrift die den Schaufeln (bzw. Schaufelblättern) zugewandte Oberfläche der Plattform bezeichnet.

Der Rand der Plattform, den der im Betrieb durch den Ringraum der Strömungsmaschine führende (axiale) Hauptstrom zuerst passiert, wird in dieser Schrift "anströmseitige" Plattformkante genannt; als "abströmseitige" Plattformkante wird entsprechend der gegenüber liegende Rand bezeichnet. Die Angaben "stromab" bzw. "stromauf" beziehen sich entsprechend auf die axiale Hauptstromrichtung und dabei lediglich auf die axiale Position, also ungeachtet einer möglichen Verschiebung in Umfangs- oder radialer Richtung: Insbesondere ist ein Punkt in dieser Schrift als "stromab der Anströmkanten" (oder als "stromab eines anderen Punktes") liegend zu verstehen, wenn er im Vergleich zu einer direkten Verbindung der Anströmkanten (miteinander) an der Plattformoberfläche (bzw. im Vergleich zum anderen Punkt) axial in/mit Hauptstromrichtung (also ihr folgend) versetzt angeordnet ist; Analoges gilt für die Bezeichnung "stromauf" (mit entgegengesetzter Richtung).

Der Abschnitt der Plattformoberfläche, der in axialer Richtung durch die direkten (also in Umfangsrichtung ohne axiale Abweichungen verlaufenden) Verbindungen der Anströmkanten bzw. der Abströmkanten benachbarter Schaufelblätter an der Plattformoberfläche begrenzt ist und in Umfangsrichtung durch die Druckseite des einen und die Saugseite des anderen Schaufelblattes, wird in dieser Schrift als "Schaufelzwischenstreifen" bezeichnet. Die Breite des Schaufelzwischenstreifens in Umfangsrichtung an den Anströmkanten wird "Teilungsabstand" (des Schaufelgitters bzw. eines Schaufelgittersegments bzw. der Schaufelblätter) genannt. Er kann insbesondere als Abstand der Anströmkanten benachbarter Schaufeln in Umfangsrichtung im Bereich der Plattformoberfläche gemessen werden. Der (allein) in Richtung des vorgesehenen axialen Hauptstroms gemessene Abstand der Anströmkanten der Schaufelblätter von ihren Abströmkanten wird (axiale) "Gitterbreite" genannt.

Die Druckseite eines Schaufelblattes und die Saugseite eines benachbarten Schaufelblattes begrenzen in Umfangsrichtung jeweils einen sogenannten Schaufelkanal. In radialer Richtung wird dieser Schaufelkanal innerhalb der Strömungsmaschine durch sogenannte Seitenwände begrenzt. Diese werden zum einen jeweils durch die Plattformen gebildet, zum anderen durch diesen Plattformen radial gegenüberliegende Abschnitte: Im Falle von Laufschaufeln ist eine derartige gegenüberliegende Seitenwand dabei ein radial außen liegender Abschnitt (beispielsweise ein Abschnitt eines Außendeckbandes der Laufschaufel(n)), im Falle von Leitschaufeln ein radial innen liegender Abschnitt (beispielsweise eine radial innere Plattform der Leitschaufel(n) oder eine Wand eines anderen Stators im Nabenbereich).

Eine durch einen Strömungskanal geführte Fluidströmung wird regelmäßig durch die Oberflächen der Seitenwände beeinflusst. Strömungsschichten, die nahe an diesen Oberflächen verlaufen, werden dabei aufgrund ihrer geringeren Geschwindigkeit stärker abgelenkt als von den Seitenwänden fernere Strömungsschichten. So entsteht eine Sekundärströmung, die einem axialen Hauptstrom überlagert ist und die insbesondere zu Wirbeln und Druckverlusten führt.

Zur Verringerung der Sekundärströmungen werden in die Seitenwände häufig Konturierungen in Form von Erhebungen und/oder Vertiefungen eingebracht.

Aus dem Stand der Technik ist eine Vielzahl von derartigen sogenannten "Seitenwandkonturierungen" bekannt.

Die Druckschrift EP 1 967 694 A2 zeigt beispielsweise eine Erhebung in einer Seitenwandkonturierung für eine Strömungsmaschine, wobei ein Schaufelblatt an einer Seite teilweise auf der Erhebung fußt (d.h. ein Teil einer Grenzlinie zwischen der Seitenwand und dem Schaufelblatt verläuft auf der Erhebung).

Aus der Druckschrift US 8 511 978 B2 ist eine Seitenwandkonturierung bekannt, bei der eine Plattform zwischen zwei Schaufelblättern eine Vertiefung aufweist, die mindestens 30% der axialen Gitterbreite stromab der Anströmkanten der Schaufelblätter angeordnet ist.

Exemplarisch seien zudem die Patente bzw. Patentanmeldungen der Anmelderin EP 2 487 329 B1, EP 2 787 172 A2, und EP 2 696 029 B1 genannt. Weitere Beispiele für Schaufelgitter sind aus EP 2 746 533 A1, EP 2 806 103 A1 und EP 2 631 429 A1 bekannt.

Aufgabe der vorliegenden Erfindung ist es, eine Technik bereitzustellen, mit der Sekundärströme im Ringraum einer Turbine auf vorteilhafte Weise reduziert werden können.

Die Aufgabe wird gelöst durch einen Schaufelgittersegment gemäß Anspruch 1, ein Schaufelgitter nach Anspruch 8, einen Schaufelkanal gemäß Anspruch 9, eine Strömungsmaschine nach Anspruch 10 und ein Flugzeugtriebwerk gemäß Anspruch 11. Vorteilhafte Ausführungsformen sind in den Unteransprüchen, der Beschreibung und den Figuren offenbart.

Ein erfindungsgemäßes Schaufelgittersegment ist ein Segment eines Schaufelgitters für eine Strömungsmaschine, beispielsweise für eine Niederdruckturbine. Es umfasst eine Plattform mit einer Plattformoberfläche sowie mindestens zwei Schaufelblätter. Zwischen der Druckseite eines ersten und der Saugseite des zweiten der Schaufelblätter liegt auf der Plattformoberfläche ein Schaufelzwischenstreifen, dessen axiale Gitterbreite durch die An- und Abströmkanten der Schaufelblätter bestimmt ist. Die Plattformoberfläche weist eine Vertiefung auf, die an das erste Schaufelblatt (bzw. dessen Druckseite und/oder Abströmkante) heranreicht, dieses also berührt: Ein Abschnitt einer Grenzlinie zwischen dem ersten Schaufelblatt und der Plattformoberfläche kann also mit einem Abschnitt einer die Vertiefung begrenzenden Nullhöhenlinie übereinstimmen (so dass also die Vertiefung an ihrem Rand das erste Schaufelblatt berührt), oder die Grenzlinie kann teilweise in der Vertiefung verlaufen. Die letztgenannte Situation, in der also die Grenzlinie eine durch die Vertiefung bestimmte Kontur aufweist, wird in dieser Schrift auch als "fußen" eines Abschnitts des Schaufelblattes in der Vertiefung bezeichnet. Das erste Schaufelblatt kann gemäß vorteilhaften Ausführungsformen der vorliegenden Erfindung an seiner Druckseite und/oder an seiner Abströmkante in der Vertiefung fußen.

Als "Vertiefung" wird in dieser Schrift eine lokale Ausformung (wie z.B. eine Senke bzw. Nische) in der Plattformoberfläche bezeichnet, in der sich diese in radialer Richtung zur von den Schaufelblättern abgewandten Seite hin erstreckt. Als "Erhebung" ist (z.B. weiter unten) analog eine lokale Ausformung (wie beispielsweise ein Buckel bzw. Vorsprung) in der Plattformoberfläche in die andere Richtung (also zur den Schaufelblättern zugewandten Seite hin) zu verstehen.

Den Bezeichnungen "Vertiefung" und "Erhebung" (ebenso wie Begriffen wie "Tiefe", "Höhe" oder ähnlichem) liegt hier also eine Orientierung bzw. ein Koordinatensystem zugrunde, bei der/dem sich die Schaufelblätter und eine Erhebung von der Plattformoberfläche nach "oben" erstrecken und eine Vertiefung dementsprechend in die entgegengesetzte Richtung (nach "unten") führt. Insbesondere wird dabei also der Schaufelkanal als "oberhalb" der Plattformoberfläche liegend angesehen.

Die Vertiefung in der Plattformoberfläche eines erfindungsgemäßen Schaufelgittersegments berührt die Druckseite des ersten Schaufelblattes ausschließlich stromab von 80% der axialen Gitterbreite stromab der Anströmkanten.

Als vorteilhaft hat sich eine Ausführungsform erwiesen, bei der die Vertiefung vollständig stromab von 80% der axialen Gitterbreite stromab der Anströmkanten liegt, also mit jedem ihrer Punkte stromab einer anströmseitigen Begrenzung des am weitesten stromab liegenden Fünftels des Schaufelzwischenstreifens.

Die Vertiefung in der Plattformoberfläche eines erfindungsgemäßen Schaufelgittersegments weist ferner einen tiefsten Punkt auf, der wenigstens 90% der axialen Gitterbreite stromab der Anströmkanten der Schaufelblätter liegt.

Als "tiefste Punkte" werden dabei in dieser Schrift die Punkte der jeweiligen Vertiefung verstanden, in denen sich diese in radialer Richtung am weitesten von einer Seite weg erstreckt, an der eine der Plattform gegenüberliegende Seitenwand angeordnet bzw. anzuordnen ist, so dass also ein zugehöriger Schaufelkanal in einem tiefsten Punkt der Vertiefung lokal maximal erweitert wird. Analog ist (weiter unten) ein "höchster Punkt" einer Erhebung ein Punkt, in dem sich die Erhebung (im Vergleich zu den anderen Punkten der Erhebung) am weitesten zu der Seite hin erstreckt, an der eine der Plattform gegenüberliegende Seitenwand angeordnet bzw. anzuordnen ist, so dass also ein zugehöriger Schaufelkanal dort maximal lokal verengt wird.

Mehrere höchste bzw. tiefste Punkte können jeweils einen Flächenabschnitt oder eine Kurve ausbilden (wenn eine zugehörige Erhebung beispielsweise ein Plateau bzw. einen Rücken oder Grat ausbildet; Analoges gilt für eine Vertiefung, z.B. wenn sie eine Rinne, eine Furche oder ein Becken ausbildet), oder ein höchster bzw. tiefster Punkt kann singulär sein.

Gemäß einer exemplarischen Ausführungsform weist die Vertiefung genau einen tiefsten Punkt auf.

Die Plattformoberfläche kann insbesondere eine Kurve oder einen Oberflächenabschnitt ausbilden, die/der sich stromauf der Vertiefung (bevorzugt höchstens 20% der axialen Gitterbreite stromauf der Abströmkanten) von der Druckseite des ersten zur Saugseite des zweiten Schaufelblatts erstreckt und die/der eine Nullhöhenlinie bzw. eine (unkonturierte) Nullhöhenfläche in dem Sinne bildet, dass eine Vertiefung radial unterhalb (und ggf. eine Erhebung radial oberhalb) der Nullhöhenlinie bzw. Nullhöhenfläche liegt. Dabei wird, wie oben erwähnt, ein Schaufelkanal als "oberhalb" der Plattformoberfläche liegend angesehen. Insbesondere kann eine solche Nullhöhenfläche vorzugsweise einen Teilstreifen des Schaufelzwischenstreifens umfassen, dessen anströmseitige Begrenzung sich 20% der axialen Gitterbreite stromauf der Abströmkante liegend in Umfangsrichtung (ohne axiale Abweichung) vom ersten zum zweiten Schaufelblatt erstreckt. Eine abströmseitige Begrenzung eines solchen Teilstreifens kann analog in jedem ihrer Punkte 15% oder sogar nur 10% stromauf der Abströmkanten in Umfangsrichtung vom ersten zum zweiten Schaufelblatt verlaufen (so dass der Teilstreifen also eine (in axialer Hauptstromrichtung gemessene) Breite von durchgehend 5% oder sogar durchgehend 10% der axialen Gitterbreite aufweist).

Ein erfindungsgemäßes Schaufelgittersegment kann einteilig oder zusammengesetzt sein. Insbesondere kann die Plattform einteilig sein oder zwei oder mehr Teile umfassen, von denen jeweils eines der Schaufelblätter absteht, oder die Plattform kann als separates Bauteil ausgebildet sein, das zwischen den Schaufelblättern angeordnet ist oder werden kann. Entsprechend ist eine erfindungsgemäße Plattform dazu eingerichtet, in Umfangsrichtung an jeder Seite an ein Schaufelblatt anzugrenzen und mit den Schaufelblättern (von denen keines, genau eines oder beide fest an die Plattform angeformt sein kann) zusammen ein erfindungsgemäßes Schaufelgittersegment gemäß einer der in dieser Schrift offenbarten Ausführungsformen auszubilden.

Ein erfindungsgemäßes Schaufelgitter umfasst mindestens ein erfindungsgemäßes Schaufelgittersegment gemäß einer der in dieser Schrift offenbarten Ausführungsformen.

Ein erfindungsgemäßer Schaufelkanal führt durch ein erfindungsgemäßes Schaufelgittersegment gemäß einer der in dieser Schrift offenbarten Ausführungsformen, ist also durch ein derartiges Schaufelgittersegment sowie eine dessen Plattform gegenüberliegende (der Plattformoberfläche zugewandte) Seitenwand begrenzt. In Umfangsrichtung ist der Schaufelkanal durch die Druckseite des ersten Schaufelblatts des Schaufelgittersegments und durch die gegenüberliegende Saugseite des (benachbarten) zweiten Schaufelblatts begrenzt.

Das Schaufelgittersegment bzw. das Schaufelgitter bzw. der Strömungskanal bzw. die Plattform können insbesondere Teil einer Niederdruckturbine bzw. dazu eingerichtet sein, in einer Niederdruckturbine eingebaut bzw. verwendet zu werden. Die Schaufelblätter können jeweils Leit- oder Laufschaufelblätter sein. Die Plattform kann dazu eingerichtet sein, einen Schaufelkanal durch das Schaufelgittersegment nach radial innen oder nach radial außen zu begrenzen.

Eine erfindungsgemäße Strömungsmaschine umfasst ein oder mehrere erfindungsgemäße(s) Schaufelgitter. Ein solches kann insbesondere im Bereich einer Niederdruckturbine der Strömungsmaschine angeordnet sein.

Ein erfindungsgemäßes Flugzeugtriebwerk umfasst eine erfindungsgemäße Strömungsmaschine.

Ein erfindungsgemäßes Schaufelgittersegment, ein erfindungsgemäßes Schaufelgitter, ein erfindungsgemäßer Schaufelkanal, eine erfindungsgemäße Plattform, eine erfindungsgemäße Strömungsmaschine und ein erfindungsgemäßes Flugzeugtriebwerk beeinflussen durch die erfindungsgemäße Geometrie der Plattformoberfläche das statische Druckfeld an der Plattformoberfläche und auf die Schaufeln im Randbereich. Dadurch wird jeweils eine Reduktion der Sekundärströmung, insbesondere von Wirbeln im Schaufelkanal ermöglicht. So können Verluste verringert und die Zuströmung in ein ggf. stromab liegendes weiteres Schaufelgitter verbessert werden.

Der mindestens eine tiefste Punkt der Vertiefung kann auf einer Grenzlinie zwischen Plattformoberfläche und Druckseite des ersten Schaufelblattes oder an dessen Abströmkante liegen.

Als vorteilhaft hat sich eine Ausführungsvariante erwiesen, bei der die Vertiefung stromab über den Schaufelzwischenstreifen hinausragt, also einen Bereich aufweist, der stromab der Abströmkanten der Schaufelblätter liegt. Der Bereich kann mindestens einen tiefsten Punkt der Vertiefung umfassen, und/oder ein tiefster Punkt der Vertiefung kann auf einer abstromseitigen Begrenzung des Schaufelzwischenstreifens liegen, d.h. auf einer direkt in Umfangsrichtung verlaufenden Verbindung (die also keine axialen Abweichungen aufweist) der Abströmkanten der Schaufelblätter entlang der Plattformoberfläche.

Bei einem Schaufelgittersegment einer vorteilhaften Ausführungsform erstreckt sich die Vertiefung vom ersten Schaufelblatt in Umfangsrichtung um höchstens 60% oder um höchstens 50% eines Teilungsabstandes des Schaufelgittersegments.

Gemäß der vorliegenden Erfindung weist die Plattformoberfläche außer der Vertiefung noch mindestens eine Erhebung auf. Dadurch können Strömungsverluste vorteilhaft weiter reduziert werden. Eine derartige Erhebung ist ganz oder teilweise stromauf der Vertiefung angeordnet (beispielsweise sogar stromauf einer (unkonturierten) Nullhöhenfläche, die sich, wie oben beschrieben, stromauf der Vertiefung vom ersten zum zweiten Schaufelblatt erstrecken kann).

Die Erhebung kann vorzugsweise an das erste Schaufelblatt heranreichen, dieses also berühren. Eine Grenzlinie zwischen Plattformoberfläche und der Druckseite des ersten Schaufelblattes kann somit einen Abschnitt aufweisen, der mit einem Teil einer die Erhebung begrenzenden Nullhöhenlinie übereinstimmt. Ein Abschnitt des ersten Schaufelblattes fußt an dessen Druckseite auf der Erhebung: In der Terminologie dieser Schrift bedeutet dies, dass die Grenzlinie zwischen der Plattformoberfläche und dem Schaufelblatt (in dem Abschnitt) über die Erhebung verläuft, also eine durch die Erhebung bestimmte Kontur aufweist.

Als vorteilhaft hat sich eine Ausführungsvariante erwiesen, bei der mindestens ein höchster Punkt der Erhebung in einem (in Umfangsrichtung gemessenen) Abstand von der Druckseite des ersten Schaufelblattes liegt, der höchstens 10% oder sogar höchstens 5% des Teilungsabstandes beträgt, oder bei der ein höchster Punkt der Erhebung sogar auf einer Grenzlinie zwischen dem ersten Schaufelblatt und der Plattformoberfläche liegt.

Bei einer bevorzugten Ausführungsform der vorliegenden Erfindung ist die Vertiefung eine erste Vertiefung und weist die Plattformoberfläche mindestens eine zweite Vertiefung auf, die ganz oder teilweise stromauf der ersten Vertiefung angeordnet ist. Insbesondere kann die zweite Vertiefung mit jedem ihrer Punkt mindestens 20% der axialen Gitterbreite stromauf der Abströmkanten der Schaufelblätter liegen. Vorzugsweise reicht die zweite Vertiefung an die Saugseite des zweiten Schaufelblattes heran.

Als vorteilhaft hat sich insbesondere eine Ausführungsvariante erwiesen, bei der ein Abschnitt des zweiten Schaufelblatts an dessen Saugseite in der zweiten Vertiefung der Plattformoberfläche fußt.

Mindestens ein tiefster Punkt der zweiten Vertiefung liegt vorzugsweise in einem (in Umfangsrichtung gemessenen) Abstand von der Saugseite des zweiten Schaufelblattes, der höchstens 10% oder sogar höchstens 5% des Teilungsabstandes beträgt, oder ein tiefster Punkt liegt sogar auf einer Grenzlinie zwischen dem zweiten Schaufelblatt und der Plattformoberfläche.

In Umfangsrichtung erstreckt sich eine zweite Vertiefung vorzugsweise von der Saugseite des zweiten Schaufelblattes um höchstens 60% oder sogar höchstens 50% des Teilungsabstandes in den Schaufelzwischenstreifen hinein. Sie kann beispielsweise teilweise von einer Nullhöhenlinie (oder sogar Nullhöhenfläche) begrenzt sein, die sich von einer ersten Stelle an der Saugseite des zweiten Schaufelblattes zu einer zweiten Stelle der Saugseite erstreckt, so dass dann also die zweite Vertiefung zwischen der Saugseite und der Nullhöhenlinie (bzw. -fläche) eingefasst ist.

Gemäß einer vorteilhaften Ausführungsform weist die Plattformoberfläche sowohl eine erste und eine zweite Vertiefung als auch eine Erhebung mit einem oder mehreren der in dieser Schrift genannten Merkmale auf. Ein allein in axialer Hauptstromrichtung gemessener Abstand eines höchsten Punktes der Erhebung und eines tiefsten Punktes der zweiten Vertiefung kann dabei weniger als 15% oder sogar weniger als 10% der axialen Gitterbreite betragen, oder ein höchster Punkt der Erhebung und ein tiefster Punkt der zweiten Vertiefung können sogar im Wesentlichen gleich weit stromab der Anströmkanten der Schaufelblätter angeordnet sein. Die Erhebung kann die Vertiefung in einem Punkt oder in einem Bereich berühren (bzw. in die zweite Vertiefung übergehen), oder die Plattformoberfläche kann eine Nullhöhenfläche ausbilden, die sich durchgehend von den anströmseitigen Plattformkante durch den Schaufelzwischenstreifen bis zur abströmseitigen Plattformkante erstreckt und die in axialer Hauptstromrichtung insbesondere zwischen der Erhebung und der zweiten Vertiefung hindurchführt.

Im Folgenden werden Ausführungsbeispiele anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: ein Schaufelgittersegment einer ersten exemplarischen Ausführungsform in Draufsicht;
- Figur 2:: ein Schaufelgittersegment einer zweiten exemplarischen Ausführungsform in Draufsicht;
- Figur 3:: ein Schaufelgittersegment einer dritten exemplarischen erfindungsgemäßen Ausführungsvariante in Draufsicht;
- Figur 4:: ein Schaufelgittersegment einer vierten exemplarischen Ausführungsvariante in Draufsicht; und
- Figur 5:: ein Schaufelgittersegment einer fünften exemplarischen erfindungsgemäßen Ausführungsvariante in Draufsicht.

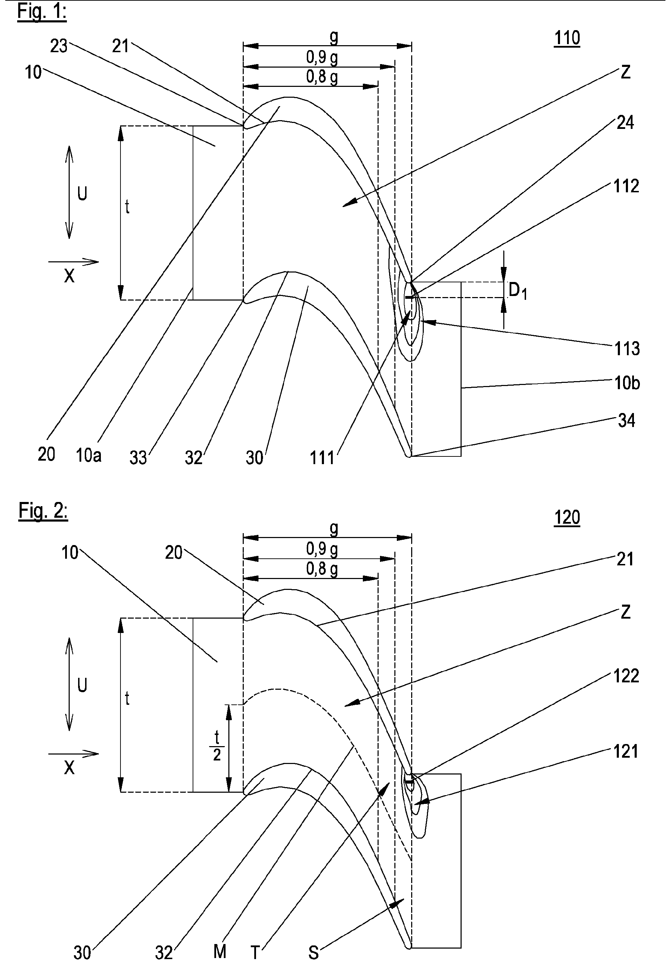

In Figur 1 ist in Draufsicht (mit radialer Blickrichtung) schematisch eine exemplarische, abgewickelte Ausführungsform eines Schaufelgittersegments 110 dargestellt. Es umfasst zueinander benachbarte Schaufelblätter 20, 30, die jeweils eine Druckseite und eine Saugseite aufweisen, sowie eine erfindungsgemäße Plattform 10 mit einer (bezogen auf die vorgesehene axiale Hauptstromrichtung X) anströmseitigen Plattformkante 10a und einer abströmseitigen Plattformkante 10b. Die Plattform kann einteilig oder beispielsweise zweiteilig ausgebildet sein (nicht dargestellt), insbesondere kann sie zwei Teile umfassen, von denen jeweils eines der Schaufelblätter 20, 30 absteht.

Ein Schaufelzwischenstreifen Z erstreckt sich in Umfangsrichtung U von der Druckseite 21 eines ersten Schaufelblatts 20 zur Saugseite 32 des zweiten Schaufelblattes 30. In axialer Richtung X wird der Schaufelzwischenstreifen Z anströmseitig durch eine Verbindung der Anströmkanten 23, 33 der Schaufelblätter 20, 30 und abströmseitig durch eine Verbindung der jeweiligen Abströmkanten 24, 34 begrenzt; die Verbindungen verlaufen dabei auf der Plattformoberfläche rein in Umfangsrichtung (also ohne Abweichung in axialer Richtung), und sie haben einen Abstand g voneinander, welcher der axialen Gitterbreite g des Schaufelzwischenstreifens entspricht. Ein Teilungsabstand t ist als der Abstand der Anströmkanten 23, 33 voneinander an der Plattformoberfläche definiert.

Die Plattformoberfläche weist eine in der Figur 1 durch Höhenlinien verdeutlichte Vertiefung 111 mit einem tiefsten Punkt 112 auf. Wie aus den Höhenlinien und den gestrichelten Markierungslinien ersichtlich, erstreckt sich die Vertiefung 111 entgegen der vorgesehenen Hauptstromrichtung betrachtet um weniger als 20% der axialen Gitterbreite g stromauf der Abströmkanten 24, 34 der Schaufelblätter 20, 30; die Vertiefung 111 liegt somit vollständig stromab von 80% der axialen Gitterbreite g stromab der Anströmkanten 23, 33. Ein tiefster Punkt 112 liegt dabei im gezeigten Beispiel im Wesentlichen auf einer abströmseitigen Begrenzung des Schaufelzwischenstreifens Z, insbesondere damit weiter als 90% der axialen Gitterbreite stromab der Anströmkanten 23, 33 der Schaufelblätter 20, 30. In Umfangsrichtung U gemessen hat der tiefste Punkt 112 der Vertiefung 111 bei dem in Figur 1 gezeigten Schaufelgittersegment 110 einen Abstand D₁ von der Druckseite 21 der ersten Schaufel 20, wobei D₁ ≤ t/10 gilt. Der Abstand beträgt somit bei dem in Figur 1 gezeigten Schaufelgittersegment 110 höchstens 10% des Teilungsabstandes t.

Die Vertiefung 111 reicht stromab von 80% der axialen Gitterbreite g stromab der Anströmkanten 23, 33 an die Druckseite 21 des ersten Schaufelblattes 20 heran, berührt die Druckseite 21 also in einem im am weitesten stromab liegenden Fünftel des Schaufelzwischenbereichs angeordneten Berührbereich. Ein im Bereich der Abströmkante 24 liegender Abschnitt des ersten Schaufelblatts 20 fußt an dessen Druckseite 21 sogar in der Vertiefung 111. Ausgehend von den Abströmkanten 24, 34 entgegen der vorgesehenen Hauptstromrichtung X berührt die Vertiefung 111 dabei die Druckseite 21 des ersten Schaufelblattes maximal bis zur in der Figur durch eine gestrichelte Linie gekennzeichneten anströmseitigen Begrenzung (die 0,8g stromab der Anströmkanten rein in Umfangsrichtung verläuft) des am weitesten stromab liegenden Fünftels des Schaufelzwischenstreifens, also nicht über diese Begrenzung hinaus, sondern ausschließlich in dem genannten Fünftel des Schaufelzwischenstreifens.

Die Vertiefung 111 weist einen Bereich 113 auf, der stromab der Abströmkanten 24, 34 der Schaufelblätter liegt.

In Figur 2 ist (ebenfalls in Draufsicht mit radialer Blickrichtung) schematisch ein Schaufelgittersegment 120 dargestellt, das eine Vertiefung 121 aufweist. Die Vertiefung 112 erstreckt sich in diesem Beispiel um weniger als 10% der axialen Gitterbreite g stromauf der Abströmkanten 24, 34. Stromauf der Vertiefung 121 ist eine Nullhöhenfläche angeordnet, die einen Teilstreifen T des Schaufelzwischenstreifens Z umfasst. Dessen an- und abströmseitige Begrenzungen sind in der Figur durch gestrichelte Linien kenntlich gemacht, die 80% bzw. 90% der axialen Gitterbreite g stromab der Anströmkanten 23, 33 der Schaufelblätter in Umfangsrichtung (ohne axiale Abweichung) vom ersten zum zweiten Schaufelblatt verlaufen. In axialer Hauptstromrichtung X hat der Teilstreifen T somit eine Breite von durchgehend 10% der axialen Gitterbreite g.

Die Vertiefung 121 erstreckt sich in Umfangsrichtung um weniger als 50% des Teilungsabstandes t. Insbesondere weist die Plattformoberfläche des Schaufelgittersegments 121 eine Nullhöhenfläche auf, die einen Streifenabschnitt S umfasst, der zwischen der Vertiefung 121 und dem zweiten Schaufelblatt liegt und sich im am weitesten stromab liegenden Zehntel des Schaufelzwischenstreifens von der Saugseite 32 des zweiten Schaufelblattes 30 in Umfangsrichtung U bis zur Teilungsmitte M erstreckt; diese hat in jedem ihrer Punkte in Umfangsrichtung U gemessen denselben Abstand von der Druckseite 21 des ersten wie von der Saugseite 32 des zweiten Schaufelblattes.

Ein in Umfangsrichtung gemessener Abstand des tiefsten Punktes 122 von der Druckseite des ersten Schaufelblattes beträgt im gezeigten Ausführungsbeispiel höchstens 5% des Teilungsabstandes t. Insbesondere kann das erste Schaufelblatt 20 an seiner Abströmkante 24 im tiefsten Punkt 122 fußen, sich also aus diesem erheben.

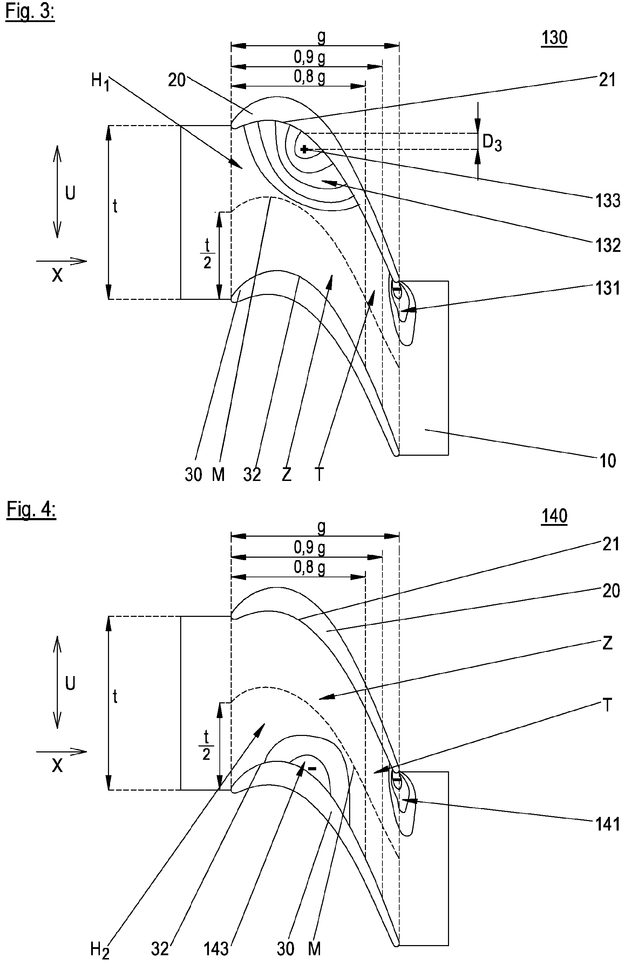

In Figur 3 ist ein Ausführungsbeispiel für ein erfindungsgemäßes Schaufelgittersegment 130 dargestellt, bei dem die Plattform 10 außer einer Vertiefung 131 auch eine Erhebung 132 aufweist. Die Vertiefung 131 ist vorliegend wie im in Figur 2 gezeigten Beispiel ausgebildet und wird daher nicht nochmals näher beschrieben; es versteht sich, dass beispielsweise auch eine Vertiefung, wie sie in Figur 1 gezeigt ist, zusammen mit einer Erhebung in der Plattformoberfläche eines erfindungsgemäßen Schaufelgittersegments angeordnet sein kann.

Die Erhebung 132 ist vollständig stromauf der Vertiefung 131 angeordnet, und zwar im gezeigten Beispiel in einer an der Druckseite 21 des ersten Schaufelblattes 20 liegenden Hälfte Hi des Schaufelzwischenstreifens Z (die also in Umfangsrichtung durch die Teilungsmitte M begrenzt wird).

Das erste Schaufelblatt 20 fußt (an seiner Druckseite) in einem stromauf der Vertiefung 131 liegenden Abschnitt auf der Erhebung 132, eine Grenzlinie zwischen dem ersten Schaufelblatt 20 und der Plattformoberfläche läuft also über die Erhebung 133 und in die Vertiefung 131.

Ein höchster Punkt 133 der Erhebung 132 hat einen in Umfangsrichtung gemessenen Abstand D₃ von der Druckseite 21 des ersten Schaufelblattes; vorzugsweise gilt D₃ ≤ t/5 oder sogar D₃ ≤ t/10. In axialer Hauptstromrichtung X liegt der höchste Punkt 133 in einem mittleren Bereich der Erhebung 132, und zwar in einem Bereich zwischen 35% und 65% der axialen Gitterbreite g stromab der Anströmkanten 24, 34 der Schaufelblätter.

Stromauf der Vertiefung 121 und stromab der Erhebung 122 ist eine Nullhöhenfläche angeordnet, die einen Teilstreifen T des Schaufelzwischenstreifens Z umfasst, der wie in der Figur 2 definiert ist. Insbesondere sind seine an- und abströmseitigen Begrenzungen in der Figur durch gestrichelte Linien kenntlich gemacht, die 80% bzw. 90% der axialen Gitterbreite g stromab der Anströmkanten 23, 33 der Schaufelblätter in Umfangsrichtung (ohne axiale Abweichung) vom ersten zum zweiten Schaufelblatt verlaufen.

Bei der in der Figur 4 gezeigten Variante eines Schaufelgittersegments 140 weist die Plattformoberfläche eine erste Vertiefung 141 und darüber hinaus eine zweite Vertiefung 143 auf. Die erste Vertiefung 141 ist vorliegend wiederum wie im in Figur 2 gezeigten Beispiel ausgebildet und wird daher nicht nochmals näher beschrieben; es versteht sich, dass auch eine andere Vertiefung, beispielsweise eine wie sie in Figur 1 gezeigt ist, zusammen mit einer zweiten Vertiefung in der Plattformoberfläche eines Schaufelgittersegments angeordnet sein kann.

Die zweite Vertiefung ist in einer an der Saugseite 31 des zweiten Schaufelblattes liegenden Hälfte H₂ des Schaufelzwischenstreifens Z angeordnet (die also in Umfangsrichtung durch eine Teilungsmitte M begrenzt wird). In einem (bezogen auf die axiale Hauptstromrichtung mittleren) Abschnitt des Schaufelzwischenstreifens Z fußt das zweite Schaufelblatt 30 (an seiner Saugseite) teilweise in der zweiten Vertiefung 143.

Ein Teilstreifen T des Schaufelzwischenstreifens, der wie mit Bezug auf die Figuren 2 und 3 definiert ist und sich zwischen 80% und 90% der axialen Gitterbreite g stromab der Anströmkanten 23, 33 in Umfangsrichtung erstreckt, verläuft zwischen der ersten Vertiefung 131 und der zweiten Vertiefung 132 und ist Teil einer Nullhöhenfläche der Plattformoberfläche. In axialer Hauptstromrichtung X betrachtet liegt ein tiefster Punkt der zweiten Vertiefung 143 in einem mittleren Bereich der zweiten Vertiefung 143.

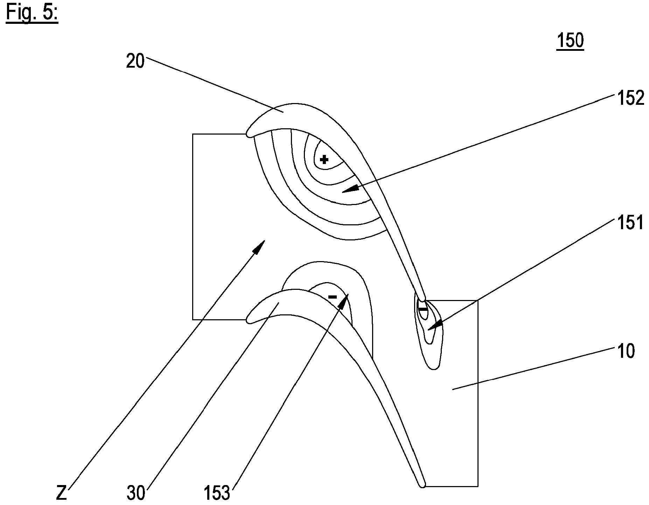

Figur 5 zeigt eine weitere exemplarische Ausführungsform eines erfindungsgemäßen Schaufelgittersegments 150. Dieses weist eine erste Vertiefung 151, eine zweite Vertiefung 153 und eine Erhebung 152 auf, die im gezeigten Beispiel analog zu den in den Figuren 3 bzw. 4 gezeigten Ausführungsbeispielen ausgebildet sind. Die speziellen Eigenschaften der Vertiefungen und der Erhebung sind daher entsprechend wie oben beschrieben; auf die die Abmessungen betreffenden (gestrichelten) Hilfslinien wurde dabei in der Figur 5 verzichtet. In Umfangsrichtung ist beim Schaufelgittersegment 150 die zweite Vertiefung 152 etwa der Erhebung 152 gegenüberliegend angeordnet. Wiederum versteht sich, dass die Figur lediglich exemplarische Ausbildungen der Vertiefungen und der Erhebung zeigt.

Offenbart wird ein Schaufelgittersegment 110, 120, 130, 140, 150 eines Schaufelgitters für eine Strömungsmaschine, das eine Plattform 10 mit einer Plattformoberfläche sowie mindestens zwei Schaufelblätter 20, 30 umfasst. Die Plattformoberfläche weist eine an das erste Schaufelblatt heranreichende Vertiefung 111, 121, 131, 141, 151 auf, welche die Druckseite 21 des ersten Schaufelblattes stromab von 80% der axialen Gitterbreite g stromab Anströmkanten 23, 33 berührt und die Druckseite 21 des ersten Schaufelblattes bis zu maximal 80% der axialen Gitterbreite g stromab Anströmkanten 23, 33 berührt. Mindestens ein tiefster Punkt 112, 122 der Vertiefung liegt wenigstens 90% der axialen Gitterbreite g stromab der Anströmkanten 23, 33.

Offenbart sind ferner ein Schaufelgitter, ein Schaufelkanal, eine Strömungsmaschine und ein Flugzeugtriebwerk.

### Bezugszeichen

- 110, 120, 130, 140, 150: Schaufelgittersegment

- 10: Plattform
- 10a: anströmseitige Plattformkante
- 10b: abströmseitige Plattformkante
- 20, 30: Schaufelblatt
- 21: Druckseite des ersten Schaufelblatts 20
- 23,33: Anströmkante
- 24, 34: Abströmkante
- 32: Saugseite des zweiten Schaufelblatts 30

- 111, 121, 131, 141, 143, 151, 153: Vertiefung
- 112, 122, 142: tiefster Punkt der Vertiefung
- 113: abstrom der Abströmkanten liegender Bereich der Vertiefung 111
- 132, 152: Erhebung
- 133: höchster Punkt der Erhebung

- g: axiale Gitterbreite
- t: Teilungsabstand

- D₁: in Umfangsrichtung gemessener Abstand des tiefsten Punktes 112 von der Druckseite des ersten Schaufelblattes
- D₃: in Umfangsrichtung gemessener Abstand des höchsten Punktes 133 von der Druckseite des ersten Schaufelblattes
- Hi: an der Druckseite des ersten Schaufelblattes liegende Hälfte des Schaufelzwischenstreifens Z
- H₂: an der Saugseite des zweiten Schaufelblattes liegende Hälfte des Schaufelzwischenstreifens Z

- M: Teilungsmitte
- S: Streifenbereich des Schaufelzwischenstreifens
- T: Teilstreifen des Schaufelzwischenstreifens
- U: Umfangsrichtung
- X: vorgesehene axiale Hauptstromrichtung
- Z: Schaufelzwischenstreifen

## Patentansprüche

1. Schaufelgittersegment (110, 120, 130, 140, 150) eines Schaufelgitters für eine Strömungsmaschine für ein Flugzeugtriebwerk, wobei das Schaufelgittersegment eine Plattform (10) mit einer Plattformoberfläche sowie ein erstes Schaufelblatt (20) und ein zweites Schaufelblatt (30) umfasst, die zwischen der Druckseite (21) des ersten und der Saugseite (32) des zweiten Schaufelblattes durch ihre jeweiligen An- und Abströmkanten (23, 33, 24, 34) auf der Plattformoberfläche einen Schaufelzwischenstreifen (Z) mit axialer Gitterbreite (g) bestimmen, wobei die Plattformoberfläche eine an das erste Schaufelblatt (20) heranreichende Vertiefung (111, 121, 131, 141, 151) aufweist, wobei die Plattformoberfläche zudem mindestens eine Erhebung (132, 152) aufweist, die ganz oder teilweise stromauf der Vertiefung (111, 121, 131, 141, 151) angeordnet ist, wobei ein Abschnitt des ersten Schaufelblattes (20) an dessen Druckseite (21) auf der Erhebung fußt, **dadurch gekennzeichnet, dass** die Vertiefung mindestens einen tiefsten Punkt (112, 122) aufweist, der wenigstens 90% der axialen Gitterbreite (g) stromab der Anströmkanten (23, 33) liegt und die Vertiefung die Druckseite (21) des ersten Schaufelblattes ausschließlich stromab von 80% der axialen Gitterbreite (g) stromab der Anströmkanten (23, 33) berührt.

2. Schaufelgittersegment (110, 120, 130, 140, 150) nach Anspruch 1, wobei die Vertiefung vollständig stromab von 80% der axialen Gitterbreite (g) stromab der Anströmkanten (23, 33) liegt.

3. Schaufelgittersegment nach Anspruch 1 oder 2, wobei ein Abschnitt des ersten Schaufelblattes (20) an dessen Druckseite (21) in der Vertiefung (111, 121, 131, 141, 151) fußt.

4. Schaufelgittersegment nach einem der vorhergehenden Ansprüche, wobei die Vertiefung einen Bereich (113) aufweist, der stromab der Abströmkanten (24, 34) der Schaufelblätter (20, 30) liegt.

5. Schaufelgittersegment nach einem der vorhergehenden Ansprüche, wobei sich die Vertiefung von der Druckseite des ersten Schaufelblattes (20) zur Saugseite (32) des zweiten Schaufelblattes (30) hin erstreckt, und sich vorzugsweise in Umfangsrichtung um höchstens 60% oder höchstens 50% eines Teilungsabstandes (t) des Schaufelgittersegments erstreckt.

6. Schaufelgittersegment nach einem der vorhergehenden Ansprüche, wobei die Vertiefung (111, 121, 131, 141, 151) eine erste Vertiefung ist und die Plattformoberfläche mindestens eine zweite Vertiefung (143, 153) aufweist, die ganz oder teilweise stromauf der ersten Vertiefung angeordnet ist.

7. Schaufelgittersegment nach Anspruch 6, wobei ein Abschnitt des zweiten Schaufelblatts (20) an dessen Saugseite (21) in der zweiten Vertiefung (143, 153) fußt.

8. Schaufelgitter für eine Strömungsmaschine, das mindestens ein Schaufelgittersegment (110, 120, 130, 140, 150) nach einem der vorangehenden Ansprüche umfasst.

9. Schaufelkanal einer Strömungsmaschine, der durch ein Schaufelgittersegment (110, 120, 130, 140, 150) nach einem Ansprüche 1 bis 7 sowie durch eine der Plattform (10) des Schaufelgittersegments gegenüberliegende Seitenwand begrenzt ist.

10. Strömungsmaschine mit mindestens einem Schaufelgitter gemäß Anspruch 8.

11. Flugzeugtriebwerk mit einer Strömungsmaschine gemäß Anspruch 10.

## Claims

1. Blade cascade segment (110, 120, 130, 140, 150) of a blade cascade for a turbomachine for an aircraft engine, the blade cascade segment comprising a platform (10) having a platform surface and a first airfoil (20) and a second airfoil (30), the first and second airfoil defining, on the platform surface, between the pressure side (21) of the first airfoil and the suction side (32) of the second airfoil and via their respective leading and trailing edges (23, 33, 24, 34), an inter-airfoil strip (Z) having an axial cascade width (g), the platform surface having a recess (111, 121, 131, 141, 151) that extends to the first airfoil (20), the platform surface also having at least one elevation (132, 152) which is arranged completely or partially upstream of the recess (111, 121, 131, 141, 151), a portion of the first airfoil (20) resting on the elevation on the pressure side (21) thereof, **characterized in that** the recess has at least one lowest point (112, 122) located downstream of the leading edges (23, 33) by at least 90% of the axial cascade width (g), and the recess contacts the pressure side (21) of the first airfoil exclusively downstream of 80% of the axial cascade width (g) downstream of the leading edges (23, 33).

2. Blade cascade segment (110, 120, 130, 140, 150) according to claim 1, wherein the recess is located completely downstream of 80% of the axial cascade width (g) downstream of the leading edges (23, 33).

3. Blade cascade segment according to either claim 1 or claim 2, wherein a portion of the first airfoil (20) rests in the recess (111, 121, 131, 141, 151) on the pressure side (21) thereof.

4. Blade cascade segment according to any of the preceding claims, wherein the recess has a region (113) which is located downstream of the trailing edges (24, 34) of the airfoils (20, 30).

5. Blade cascade segment according to any of the preceding claims, wherein the recess extends from the pressure side of the first airfoil (20) to the suction side (32) of the second airfoil (30), and preferably extends in the circumferential direction by at most 60% or at most 50% of a pitch distance (t) of the blade cascade segment.

6. Blade cascade segment according to any of the preceding claims, wherein the recess (111, 121, 131, 141, 151) is a first recess and the platform surface has at least one second recess (143, 153) which is arranged completely or partially upstream of the first recess.

7. Blade cascade segment according to claim 6, wherein a portion of the second airfoil (20) rests in the second recess (143, 153) on the suction side (21) thereof.

8. Blade cascade for a turbomachine, comprising at least one blade cascade segment (110, 120, 130, 140, 150) according to any of the preceding claims.

9. Blade channel of a turbomachine which is delimited by a blade cascade segment (110, 120, 130, 140, 150) according to any of claims 1 to 7, and by a lateral wall which is opposite the platform (10) of the blade cascade segment.

10. Turbomachine having at least one blade cascade according to claim 8.

11. Aircraft engine having a turbomachine according to claim 10.

## Revendications

1. Segment de grille d'aubes (110, 120, 130, 140, 150) d'une grille d'aubes pour une turbomachine pour un moteur d'aéronef, le segment de grille d'aubes comprenant une plate-forme (10) comportant une surface de plate-forme ainsi qu'une première pale (20) et une seconde pale (30), qui déterminent, entre l'intrados (21) de la première pale et l'extrados (32) de la seconde pale, par leurs bords d'attaque et de fuite (23, 33, 24, 34) respectifs sur la surface de plate-forme, une bande intermédiaire d'aube (Z) d'une largeur axiale de grille (g), la surface de plate-forme présentant un évidement (111, 121, 131, 141, 151) s'étendant au niveau de la première pale (20), la surface de plate-forme présentant en outre au moins une élévation (132, 152), qui est disposée totalement ou partiellement en amont de l'évidement (111, 121, 131, 141, 151), une section de la première pale (20) reposant, au niveau de son intrados (21), sur l'élévation,
**caractérisé en ce que** l'évidement présente au moins un point le plus profond (112, 122), qui se situe à au moins 90 % de la largeur axiale de grille (g) en aval des bords d'attaque (23, 33) et l'évidement étant en contact avec l'intrados (21) de la première pale exclusivement en aval de 80 % de la largeur axiale de grille (g) en aval des bords d'attaque (23, 33).

2. Segment de grille d'aubes (110, 120, 130, 140, 150) selon la revendication 1, l'évidement étant situé totalement en aval de 80 % de la largeur axiale de grille (g) en aval des bords d'attaque (23, 33).

3. Segment de grille d'aubes selon la revendication 1 ou 2, une section de la première pale (20) reposant, au niveau de son intrados (21), dans l'évidement (111, 121, 131, 141, 151).

4. Segment de grille d'aubes selon l'une des revendications précédentes, l'évidement présentant une zone (113) qui est située en aval des bords de fuite (24, 34) des pales (20, 30).

5. Segment de grille d'aubes selon l'une des revendications précédentes, l'évidement s'étendant à partir de l'intrados de la première pale (20) vers l'extrados (32) de la seconde pale (30) et s'étendant de préférence dans la direction périphérique sur au plus 60 % ou au plus 50 % d'une distance d'écartement (t) du segment de grille d'aubes.

6. Segment de grille d'aubes selon l'une des revendications précédentes, l'évidement (111, 121, 131, 141, 151) étant un premier évidement et la surface de plate-forme présentant au moins un seconde évidement (143, 153) qui est disposé totalement ou partiellement en amont du premier évidement.

7. Segment de grille d'aubes selon la revendication 6, une section de la seconde pale (20) reposant, au niveau de son extrados (21), dans le seconde évidement (143, 153).

8. Grille d'aubes pour une turbomachine, comprenant au moins un segment de grille d'aubes (110, 120, 130, 140, 150) selon l'une des revendications précédentes.

9. Canal d'aubes d'une turbomachine, qui est délimité par un segment de grille d'aubes (110, 120, 130, 140, 150) selon l'une des revendications 1 à 7 ainsi que par une paroi latérale opposée à la plate-forme (10) du segment de grille d'aubes.

10. Turbomachine comportant au moins une grille d'aubes selon la revendication 8.

11. Moteur d'aéronef comportant une turbomachine selon la revendication 10.
